(19) Europäisches Patentamt / European Patent Office / Office européen des brevets

(11) **EP 4 298 708 B1**

(12) **FASCICULE DE BREVET EUROPEEN**

(45) Date de publication et mention de la délivrance du brevet:
**27.11.2024 Bulletin 2024/48**

(21) Numéro de dépôt: **22711904.7**

(22) Date de dépôt: **21.02.2022**

(51) Classification Internationale des Brevets (IPC):
**H02J 3/36** *(2006.01)* **H02M 7/217** *(2006.01)*
**H02M 7/757** *(2006.01)*

(52) Classification Coopérative des Brevets (CPC):
**H02J 3/36; H02M 7/217; H02M 7/7575**

(86) Numéro de dépôt international:
**PCT/EP2022/054290**

(87) Numéro de publication internationale:
**WO 2022/179990 (01.09.2022 Gazette 2022/35)**

(54) **PROCEDE DE COMMANDE D'UN CONVERTISSEUR ALTERNATIF/CONTINU POUR RESEAU HAUTE TENSION CONTINUE A NOEUDS MULTIPLES**

VERFAHREN ZUR STEUERUNG EINES STROMRICHTERS IN EINEM HOCHSPANNUNGS-GLEICHSTROM-MEHRKNOTENNETZWERK

METHOD FOR CONTROLLING AN AC/DC CONVERTER IN A HIGH-VOLTAGE DIRECT CURRENT MULTI-NODE NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.02.2021 FR 2101723**

(43) Date de publication de la demande:
**03.01.2024 Bulletin 2024/01**

(73) Titulaires:
- **CentraleSupélec**
  **91190 - Gif-sur-Yvette (FR)**
- **Centre National de la Recherche Scientifique**
  **75016 Paris (FR)**
- **SORBONNE UNIVERSITE**
  **75006 Paris (FR)**
- **Supergrid Institute**
  **69100 Villeurbanne (FR)**
- **Université Paris-Saclay**
  **91190 Gif-sur-Yvette (FR)**

(72) Inventeurs:
- **SHINODA, Kosei**
  **69007 LYON (FR)**
- **BENCHAIB, Abdelkrim**
  **69007 LYON (FR)**
- **GONZALEZ, Juan Carlos**
  **69007 LYON (FR)**
- **DAI, Jing**
  **69007 LYON (FR)**

(74) Mandataire: **Opilex**
  **32, rue Victor Lagrange**
  **69007 Lyon (FR)**

(56) Documents cités:
**JP-A- 2019 205 303     JP-A- H1 051 957**

- **C.D. BARKER ET AL: "Autonomous converter control in a multi-terminal HVDC system", 9TH IET INTERNATIONAL CONFERENCE ON AC AND DC POWER TRANSMISSION (ACDC 2010), 1 January 2010 (2010-01-01), pages O61 - O61, XP055072699, ISBN: 978 1 84919 308 5, DOI: 10.1049/cp.2010.0988**
- **SASS FLORIAN ET AL: "Automated Corrective Actions by VSC-HVDC-Systems: A Novel Remedial Action Scheme", IEEE TRANSACTIONS ON POWER SYSTEMS, IEEE, USA, vol. 35, no. 1, 15 July 2019 (2019-07-15), pages 385 - 394, XP011765920, ISSN: 0885-8950, [retrieved on 20200107], DOI: 10.1109/TPWRS.2019.2928887**

**Description**

L'invention concerne réseau haute tension continue à noeuds multiples, et en particulier les convertisseurs des alternatif/continu des différents postes de conversion du réseau.

Les réseaux haute tension continue à noeuds multiples sont une composante essentielle de l'exploitation des sources d'énergie renouvelables, pour permettre notamment le transport de l'électricité avec des pertes réduites sur des très longues distances. Les postes de conversion peuvent servir d'interface à des réseau alternatifs exploités par différents opérateurs, appartenant typiquement à différents pays, avec des contraintes de fonctionnement potentiellement différentes. La coordination des contraintes des différents convertisseurs connectés au réseau continu s'avère délicate et limite fortement les marges de manoeuvre pour un contrôle local de chaque convertisseur. A cet effet, la tendance est à l'homogénéisation des règles de contrôle pour des postes de conversion connectés aux différents réseaux alternatifs.

Le document 'Coupling between the frequency droop and the voltage droop of an AC/DC converter in an MTDC system', publié par S.Akkari et al. dans 2015 IEEE Eindhoven PowerTech, PowerTech 2015, 2015, décrit un procédé de contrôle des convertisseurs de type statisme en tension et de statisme en fréquence . Ce procédé de contrôle est basé sur un contrôle local en limitant les communications entre les stations de conversion, et permet de corriger les décalages de fréquence de chaque réseau alternatif. En raison des couplages inhérents aux systèmes AC et DC et du manque de coordination entre les contrôles locaux, les marges de manoeuvre pour adapter le fonctionnement d'un convertisseur et respecter des contraintes locales sont particulièrement réduites. Ainsi, il est délicat de donner le contrôle à chaque convertisseur pour corriger sa tension continue, améliorer la stabilité en fréquence de son réseau alternatif, ou améliorer la stabilité angulaire de son réseau alternatif.

Le document US5991181 décrit un système de distribution électrique incorporant un réseau haute tension continu. Chaque poste de conversion inclut un convertisseur alternatif/continu avec un compensateur de puissance et un compensateur de tension continue. Une puissance corrigée est bornée et sommée avec un terme correctif généré par le compensateur de tension continue. Ce document ne permet pas de gérer une multiplicité de paramètres électriques au niveau de chaque poste de conversion.

Le document FR3098036 décrit un procédé de contrôle d'un système de distribution électrique. Les consignes de puissance active de chaque poste de conversion incluent des facteurs correctifs pour tenir compte de l'angle de tension des bus ou des fréquences des bus alternatifs.

L'invention vise à résoudre un ou plusieurs de ces inconvénients. L'invention porte ainsi sur un procédé de commande d'un convertisseur alternatif/continu connecté d'une part à un réseau alternatif et d'autre part à un réseau haute tension courant continu à points multiples, tel que défini dans la revendication 1 annexée.

Les documents JPH1051957A, JP2019205303A, "Autonomous converter control in a multi-terminal HVDC system" publié par C.D. Barker et al. dans 9th IET International Conférence on AC and DC Power Transmission, 2010, et "Automated Corrective Actions by VSC-HVDC-Systems: A Novel Remedial Action Scheme" publié par Sass Florian et al. dans IEEE Transactions On Power Systems, 2019, illustrent également l'arrière-plan technologique.

L'invention porte également sur les variantes des revendications dépendantes. L'homme du métier comprendra que chacune des caractéristiques de la description ou des revendications dépendantes peut être combinée indépendamment aux caractéristiques d'une revendication indépendante, sans pour autant constituer une généralisation intermédiaire.

L'invention concerne également un convertisseur alternatif/continu, tel que défini dans les revendications annexées.

L'invention porte encore sur un réseau de transmission électrique comprenant plusieurs convertisseurs tels que définis ci-dessus et des lignes haute tension continu interconnectant les interfaces continu desdits convertisseurs.

D'autres caractéristiques et avantages de l'invention ressortiront clairement de la description qui en est faite ci-après, à titre indicatif et nullement limitatif, en référence aux dessins annexés, dans lesquels :

[Fig.1] est une représentation schématique d'un exemple de système de distribution électrique intégrant des convertisseurs alternatifs/continu ;

[Fig.2] est une représentation schématique d'un exemple de réseau haute tension continu connectant les convertisseurs alternatifs/continu illustrés à la figure 1 ;

[Fig.3] illustre schématiquement différente bornes de consignes correctives des convertisseurs de la figure 1 pour un point de fonctionnement donné ;

[Fig.4] illustre différents paramètres électriques d'un système de distribution électrique lors de la mise en oeuvre de l'invention dans un premier cas de figure ;

[Fig.5] illustre des consignes correctives de puissance des convertisseurs pour un deuxième paramètre électrique, dans le premier cas de figure ;

[Fig.6] illustre des consignes correctives de puissance des convertisseurs pour un troisième paramètre électrique, dans le premier cas de figure ;

[Fig.7] illustre les puissances électriques effectives des différents convertisseurs pour le premier cas de figure ;

[Fig.8] illustre différents paramètres électriques d'un système de distribution électrique lors de la mise en oeuvre de l'invention dans un deuxième cas de figure ;

[Fig.9] illustre des consignes correctives de puissance des convertisseurs pour un premier paramètre électrique, dans le deuxième cas de figure ;

[Fig. 10] illustre des consignes correctives de puissance des convertisseurs pour un deuxième paramètre électrique, dans le deuxième cas de figure ;

[Fig.11] illustre les puissances correctives pour différents paramètres d'un convertisseur pour le deuxième cas de figure ;

[Fig. 12] illustre schématiquement la gestion des consignes correctives de puissance du système de distribution lors de la mise en oeuvre de l'invention pour le premier cas de figure.

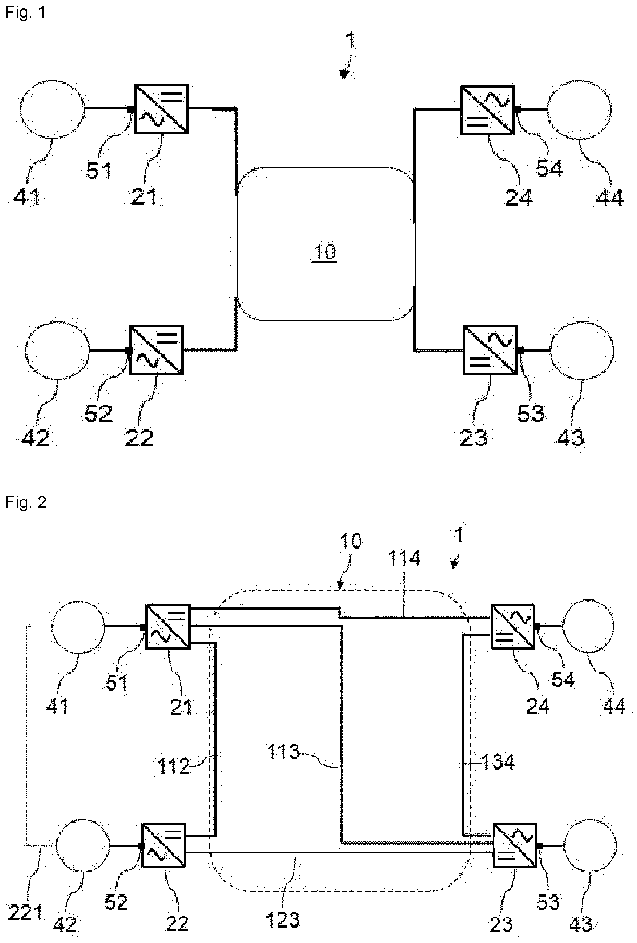

La figure 1 illustre schématiquement un exemple de système de distribution électrique 1, incorporant un réseau haute tension continu 10 connecté à des postes de conversion multiples. Le système de distribution électrique 1 comporte ainsi des postes de conversion, incluant chacun un convertisseur alternatif/continu respectif. Les postes de conversion incluent des convertisseurs 21 à 24 respectifs. Les convertisseurs 21 à 24 sont par exemple de type convertisseurs modulaires multiniveaux.

Chacun des convertisseurs 21 à 24 comporte une interface continu connectée à au moins une interface continu d'un autre convertisseur, par l'intermédiaire d'une ligne haute tension continu, comme illustré à la figure 2. Les interfaces continu des convertisseurs 21 et 22 sont ainsi connectées par l'intermédiaire de la ligne haute tension 112, les interfaces continu des convertisseurs 21 et 23 sont ainsi connectées par l'intermédiaire de la ligne haute tension 113, les interfaces continu des convertisseurs 21 et 24 sont ainsi connectées par l'intermédiaire de la ligne haute tension 114, les interfaces continu des convertisseurs 23 et 24 sont ainsi connectées par l'intermédiaire de la ligne haute tension 134, et les interfaces continu des convertisseurs 22 et 23 sont ainsi connectées par l'intermédiaire de la ligne haute tension 123.

Ainsi, l'invention peut être mise en oeuvre pour des cas où il n'y a pas des liaisons haute tension continu point à point entre les interfaces continu de chacune des paires de convertisseurs. Ainsi, il n'y a pas de ligne haute tension continu entre les convertisseurs 22 et 24.

Par ailleurs, chacun des convertisseurs 21 à 24 comporte une interface alternatif respective. L'interface alternatif de chacun des convertisseurs 21 à 24 est connectée à un bus de tension alternative 51 à 54 respectif. Chacun des bus 51 à 54 est connecté à un réseau alternatif respectif 41 à 44. Dans l'exemple illustré à la figure 2, il existe une interconnexion 221 entre les réseaux alternatif 41 et 42.

L'invention propose un procédé de commande d'un des convertisseurs alternatif/continu du système de distribution 1. On prendra ici pour référence le convertisseur 21, le procédé étant avantageusement exécuté pour chacun des convertisseurs 21 à 24 connectés au réseau 10.

De façon connue en soi, le convertisseur 21 identifie ou reçoit une consigne de puissance électrique P210 d'un dispositif externe. Le dispositif externe peut par exemple être un opérateur du réseau alternatif 41 ou un opérateur du réseau 10. Le point de fonctionnement du convertisseur 21 est par ailleurs identifié, ici à la puissance instantanée P10. De façon similaire, les points de fonctionnement des convertisseurs 22 à 24 sont avantageusement identifiés, respectivement aux puissances instantanées P20, P30 et P40.

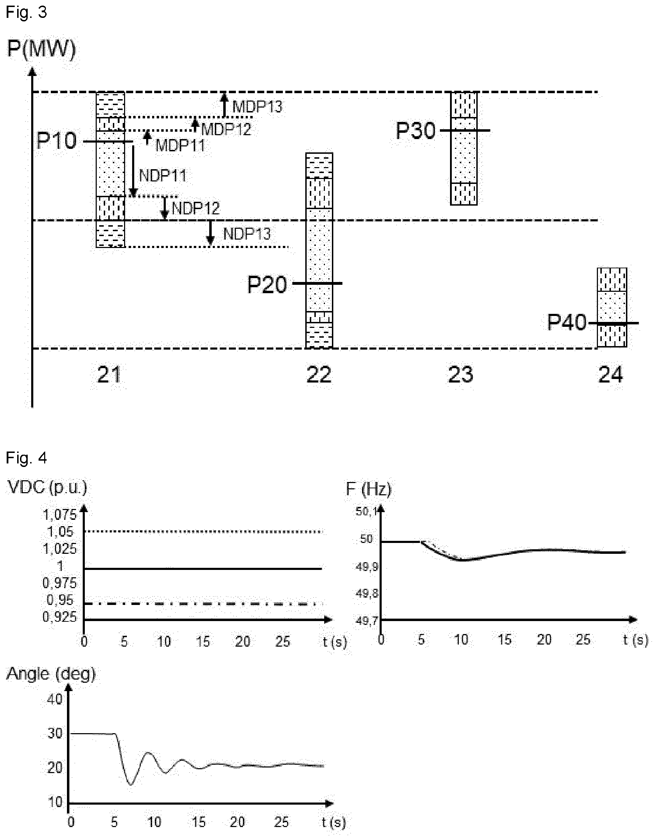

En fonction du point de fonctionnement P10 identifié pour le convertisseur 21, des bornes de consignes correctives de puissance sont fixées pour au moins deux paramètres électriques différents à contrôler. Dans l'exemple illustré à la figure 3, des bornes de consignes correctives de puissance du convertisseur 21 sont fixées pour trois paramètres électriques différents à contrôler, pour le point de fonctionnement P10. La figure 3 illustre en positif les puissances fournies au réseau 10, en négatif les puissances électriques prélevées sur le réseau 10. Ainsi, pour le point de fonctionnement P10 :

- pour un premier paramètre électrique, une borne de consigne corrective supérieure MDP11 peut être fixée, et une borne de consigne corrective inférieure NDP11 peut être fixée ;
- pour un deuxième paramètre électrique, une borne de consigne corrective supérieure MDP12 peut être fixée, et une borne de consigne corrective inférieure NDP12 peut être fixée ;
- pour un troisième paramètre électrique, une borne de consigne corrective supérieure MDP13 peut être fixée, et une borne de consigne corrective inférieure NDP13 peut être fixée.

Les bornes de consignes correctives de puissance peuvent par exemple être fixées par un calculateur du convertisseur 21 ou de l'opérateur du réseau alternatif 41, ou encore par un opérateur du réseau 10.

Avantageusement, de façon similaire :

- pour le point de fonctionnement P20, des bornes de consigne corrective de puissance du convertisseur 22 sont fixées, pour trois paramètres électriques différents à contrôler ;

- pour le point de fonctionnement P30, des bornes de consigne corrective de puissance du convertisseur 23 sont fixées, pour deux paramètres électriques différents à contrôler ;
- pour le point de fonctionnement P40, des bornes de consigne corrective de puissance du convertisseur 24 sont fixées, pour deux paramètres électriques différents à contrôler.

Des consignes correctives de puissance sont ensuite générées pour les paramètres électriques du convertisseur 21. Ces consignes correctives de puissance sont comprises entre les bornes de consigne respectives générées. Ainsi :

- pour le premier paramètre électrique, la consigne corrective de puissance DP11 est générée et appartient à l'intervalle [NDP11-MDP11] ;
- pour le deuxième paramètre électrique, la consigne corrective de puissance DP12 est générée et appartient à l'intervalle [NDP12-MDP12] ;
- pour le troisième paramètre électrique, la consigne corrective de puissance DP13 est générée et appartient à l'intervalle [NDP13-MDP13].

On applique ensuite une consigne de puissance électrique P211 au convertisseur 21, cette consigne de puissance électrique étant la somme de la consigne de puissance électrique identifiée P210 et des consignes correctives générées DP11, DP12 et DP13. Ainsi, la consigne de puissance effective P211 est déterminée comme suit :

$$P211 = P210 + DP11 + DP12 + DP13$$

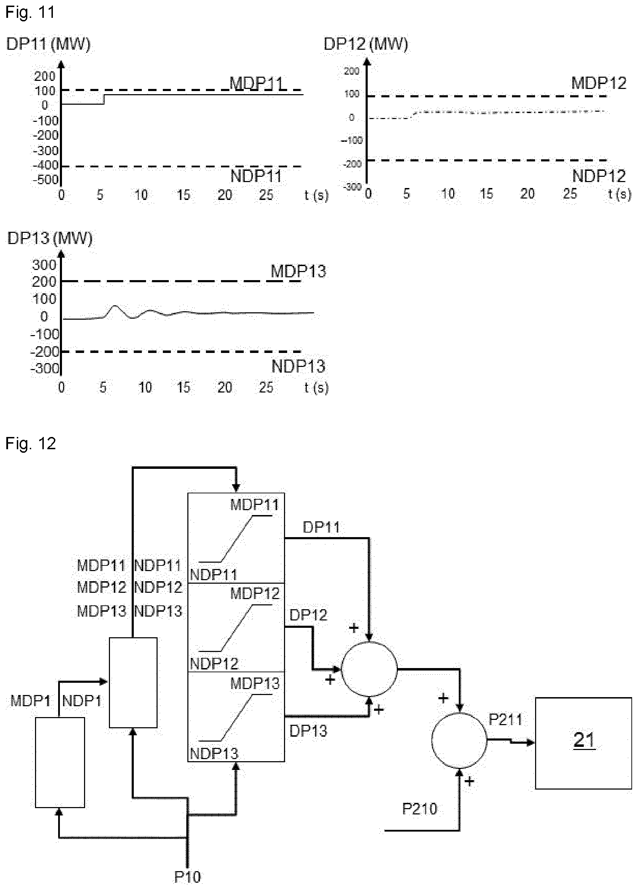

La fixation des bornes de consigne corrective, des consignes correctives et de la puissance de consigne effective correspondantes est récapitulée schématiquement dans l'illustration de la figure 12.

Ainsi, l'invention permet de découpler les paramètres électriques contrôlés. Le contrôle de chacun des paramètres électriques peut ainsi être optimisé, sans altérer le fonctionnement du convertisseur 21 ou des réseaux auxquels il est connecté.

En particulier, en fonction du point de fonctionnement P10 du convertisseur 21, une marge de puissance à la hausse MDP1 et une marge de puissance à la baisse NDP1 peuvent être déterminées pour ce convertisseur 21. Par exemple, on peut déterminer que la marge de puissance à la hausse est bridée par la puissance maximale que peut fournir le convertisseur 21, la marge de puissance à la baisse peut être bridée par une contrainte de stabilité pour le réseau alternatif 41. Le point de fonctionnement P10 illustré à la figure 3 correspond en effet à un cas où le convertisseur 21 retire de la puissance du réseau alternatif 41 pour alimenter le réseau continu 10.

La marge de puissance à la hausse MDP1 est ensuite répartie entre les paramètres électriques à contrôler. De façon similaire, la marge de puissance à la baisse NDP1 est répartie entre les paramètres électriques à contrôler. Ainsi, on fixe :

$$MDP11 + MDP12 + MDP13 = MDP1$$

et

$$NDP11 + NDP12 + NDP13 = NDP1$$

De façon similaire, on fixe avantageusement des marges de puissance respectives pour les paramètres électriques à contrôler des convertisseurs 22 à 24 :

- la marge de puissance à la hausse MDP2 et la marge de puissance à la baisse NDP2 pour le convertisseur 22, avec MDP2 = MDP21 + MDP22 + MDP23 et

$$NDP2 = NDP21 + NDP22 + NDP23;$$

- la marge de puissance à la hausse MDP3 et la marge de puissance à la baisse NDP3 pour le convertisseur 23, avec MDP3 = MDP31 + MDP32

$$NDP3 = NDP31 + NDP32;$$

- la marge de puissance à la hausse MDP4 et la marge de puissance à la baisse NDP4 pour le convertisseur 24, avec MDP4 = MDP41 + MDP42

$$NDP4 = NDP41 + NDP42.$$

Les marges de puissance à la hausse ou à la baisse des convertisseurs 21 à 24 sont également bridées par la puissance nominale respective de chaque convertisseur.

De façon similaire, des consignes correctives de puissance sont avantageusement générées :

- DP21, DP22 et DP23 pour les paramètres électriques du convertisseur 22, et sont comprises entre les bornes de consignes respectives générées MDP2 et NDP2 ;
- DP31, DP32 et DP33 pour les paramètres électriques du convertisseur 23, et sont comprises entre les bornes de consignes respectives générées MDP3 et NDP3 ;
- DP41, DP42 et DP43 pour les paramètres électriques du convertisseur 24, et sont comprises entre les bornes de consignes respectives générées MDP4 et NDP4.

De façon similaire, on peut appliquer:

- une consigne de puissance électrique P221 au convertisseur 22, cette consigne de puissance électrique étant la somme de la consigne de puissance électrique identifiée P220 et des consignes correctives générées (DP21, DP22 et DP23) pour les trois paramètres électriques de ce convertisseur ;
- une consigne de puissance électrique P231 au convertisseur 23, cette consigne de puissance électrique étant la somme de la consigne de puissance électrique identifiée P230 et des consignes correctives générées (DP31 et DP32) pour les deux paramètres électriques de ce convertisseur ;
- une consigne de puissance électrique P241 au convertisseur 24, cette consigne de puissance électrique étant la somme de la consigne de puissance électrique identifiée P240 et des consignes correctives générées (DP41 et DP42) pour les deux paramètres électriques de ce convertisseur.

De façon similaire, à la figure 3 :

- le convertisseur 22 est dans un point de fonctionnement P20, dans lequel il retire de la puissance au réseau 10 pour la fournir au réseau alternatif 42. La marge de puissance à la baisse NDP2 est définie par la puissance maximale que peut fournir le convertisseur 22. La marge de puissance à la hausse MDP2 est par exemple définie par un accord d'exploitation pour MDP22 et MDP23 et par un contrôleur du convertisseur 22 pour MDP21 ;
- le convertisseur 23 est dans un point de fonctionnement P30, dans lequel il retire de la puissance du réseau alternatif 43 pour la fournir au réseau 10. La marge de puissance à la hausse MDP3 est définie par la puissance maximale que peut fournir le convertisseur 23. La marge de puissance à la baisse NDP3 est définie par un accord d'exploitation pour NDP32 et par un contrôleur du convertisseur 23 pour NDP31 ;
- le convertisseur 24 est dans un point de fonctionnement P40, dans lequel il retire de la puissance du réseau 10 pour fournir de la puissance au réseau alternatif 44. La marge de puissance à la hausse MDP4 est définie par un accord d'exploitation pour MDP42 et par contrôleur du convertisseur 24 pour MDP41. La marge de puissance à la baisse NDP4 est définie par la puissance maximale que peut fournir le convertisseur 24.

En référence aux figures 4 à 7, l'invention est appliquée pour les paramètres électriques suivants :

- la stabilité en tension du réseau 10 ;
- la fréquence d'un réseau alternatif ;
- la stabilité angulaire d'un réseau alternatif.

La tension du réseau 10 est un indicateur de l'équilibre énergétique du réseau continu 10. Un déséquilibre entre la puissance injectée sur le réseau 10 et la puissance prélevée sur le réseau 10 conduit à des variations de la tension de ce réseau 10. Pour limiter la variation de tension sur le réseau 10, les convertisseurs mis en oeuvre pour contrôler la stabilité en tension ajustent la puissance respective prélevée ou injectée sur le réseau 10. Ce contrôle de stabilité en tension du réseau 10 sera le premier paramètre électrique contrôlé pour les convertisseurs 21 à 24.

La fréquence d'un réseau alternatif est un indicateur de son équilibre de puissance. Le convertisseur servant d'interface entre un réseau alternatif et le réseau 10 permet de limiter les variations de fréquence de ce réseau alternatif, par exemple lors d'un incident d'exploitation d'une génératrice sur ce réseau alternatif. Ce contrôle en fréquence sera mis en oeuvre par les convertisseurs 21 à 24, pour leurs réseaux alternatifs respectifs.

La stabilité angulaire sur les réseaux alternatifs est un critère important pour garantir leur fonctionnement sûr. La stabilité angulaire d'un réseau alternatif peut varier du fait d'oscillations électromécaniques des machines synchrones connectées à ce réseau alternatif. Des oscillations peuvent être associées à des génératrices par rapport à d'autres génératrices d'autres réseaux alternatifs interconnectés. Ce contrôle en fréquence sera mis en oeuvre par les convertisseurs 21 et 22.

Parmi les paramètres électriques contrôlés, on peut envisager les catégories suivantes, définie notamment dans le règlement européen EU2016/1447 du 26 Août 2016 :

- le contrôle de la puissance active et de la fréquence. Cette catégorie peut notamment comprendre des plages de fréquences, des pertes maximales de puissance active, un contrôle en fréquence, un mode à sensibilité en fréquence (contrôle d'urgence en fréquence en cas de forte variation de fréquence), une émulation d'inertie, un contrôle de la plage puissance active, la gestion de capacité de variation de changement de fréquence ;
- la continuité de service en cas de défaillance. Cette catégorie peut notamment comprendre la capacité de continuité de service en cas de défaillance, la reprise de service après une défaillance, une reprise de service accélérée suite à une défaillance sur le réseau continu ;
- le contrôle de modulation de puissance. Cette catégorie peut notamment comprendre l'alimentation et la synchronisation du convertisseur, les interactions entre le réseau continu et d'autres équipements, l'amortissement des oscillations de puissance, l'amortissement des interactions entre sous réseau synchrones, les caractéristiques du réseau, la robustesse du système ;
- les réglages de protection électrique. Cette catégorie peut notamment comprendre les réglages et stratégies de protection électrique, la priorisation de la protection et du contrôle, les changements des stratégies et réglages de protection ;

- le redémarrage du réseau.

Des simulations de mises en oeuvre de l'invention ont été réalisées et vont être détaillées par la suite. Les simulations ont été réalisées avec l'hypothèses de convertisseurs 21 à 24 ayant une puissance nominale de 1000MW. Les convertisseurs 21 à 23 sont modélisés comme des sources de puissance contrôlées, le convertisseur 24 disposant d'un contrôleur de gestion de réseau continu.

Le contrôle de la tension continue du réseau 10, premier paramètre électrique contrôlé pour chacun des convertisseurs 21 à 24, est basé sur la méthode du statisme en tension (pour droop control en langue anglaise). Les gains de statisme ont été choisis en fonction de réserves de baisse ou de hausse de tension, en supposant une variation possible de ±10% de la tension du réseau 10. Un tel choix peut par exemple être effectué comme enseigné dans le document WO2019097183.

Pour le paramètre de contrôle de fréquence de réseau alternatif, un contrôle par modèle prédictif est pris en compte. Un contrôleur centralisé pour modèle prédictif a été simulé pour générer des signaux de modulation de puissance pour équilibrer les échanges d'énergie en un temps fini.

Pour le paramètre de stabilité d'angle de réseau alternatif, on a pris l'hypothèse d'un contrôleur communiquant avec les convertisseurs 21 et 22 de façon décentralisée.

Le contrôle est ici mis en oeuvre de façon indépendante dans chacun des convertisseurs 21 à 24, afin de présenter une faible sensibilité aux décisions des différents opérateurs de réseaux alternatif. Chacun des convertisseurs 21 à 24 pourra disposer d'un contrôleur respectif (non illustré), afin de mettre en oeuvre la génération de ses consignes correctives de puissance.

Pour la gestion de la stabilité en fréquence, une réserve de puissance de ±200MW (MDP32, NDP32, MDP42, NDP42) a été attribuée aux convertisseurs 23 et 24 et +100MW pour MDP12 et -200MW pour NDP12, +200MW pour MDP22 et -100MW pour NDP22. Pour la gestion de la stabilité angulaire, une réserve de puissance de ±200MW (MDP13, NDP13, MDP23, NDP23) a été attribuée aux convertisseurs 21 et 22, interconnectés par la ligne 221. Pour la gestion de la tension du réseau 10, les allocations de marge de puissance (MDP11, NDP11, MDP21, NDP21, MDP31, NDP31, MDP41, NDP41) sont faites entre les convertisseurs 21 à 24, en fonction d'une marge de sécurité en fonction d'une défaillance d'un des convertisseurs.

Un premier cas de figure a été simulé. Dans ce premier cas de figure, à l'instant t=5s, on suppose une réduction soudaine de 2GW de la puissance fournie par une génératrice sur ce réseau 41. Cela crée un déséquilibre énergétique et induit des oscillations inter-réseaux entre les réseaux 41 et 42 interconnectés.

Ce cas de figure est représenté dans les diagrammes de la figure 4. Le diagramme de la tension VDC du réseau en fonction du temps montre que la tension du réseau 10 n'est pas affectée et maintenue constante. La courbe en trait plein représente la tension sur le réseau 10, la courbe en pointillés représente la limite supérieure de cette tension, et la courbe en tiret-point représente la limite inférieure de cette tension. Le diagramme de fréquence F montre l'évolution des fréquences des réseaux alternatif. La courbe en trait plein illustre la fréquence moyenne pondérée sur un réseau alternatif synchrone incluant les réseaux 41 et 42, la courbe en tiret-point illustrant la fréquence sur les réseaux 43 et 44 (les fréquences 43 et 44 sont distinctes car les réseaux 43 et 44 sont des réseaux asynchrones mais leurs courbes représentatives sont ici confondues).

Du fait du contrôle en fréquence, une baisse de fréquence des réseaux alternatif intervient, avec un décalage temporel entre les réseaux 41 et 42 d'une part, et les réseaux 43 et 44 d'autre part. La fréquence des différents réseaux 41 à 44 finit par converger. Le diagramme d'angle illustre l'évolution de la différence d'angle entre les interfaces 51 et 52 des convertisseurs 21 et 22 respectivement.

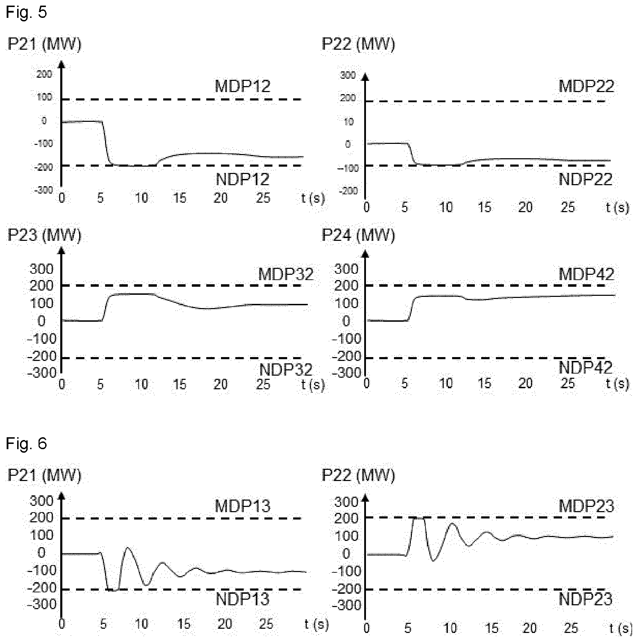

Les diagrammes de la figure 5 illustrent l'évolution des puissances électriques correctives DP12, DP22, DP32 et DP42 respectives des convertisseurs 21 à 24, utilisées pour mettre en oeuvre le contrôle de la stabilité en fréquence des réseaux alternatif. Les lignes en trait discontinu illustrent les limites inférieures et supérieures des puissances électriques correctrices pour ce paramètre électrique. Comme on peut le voir dans les diagrammes de la figure 5, le convertisseur 21 fournit moins de puissance au réseau 10. Les convertisseurs 22 et 24 prélèvent moins de puissance du réseau 10, et le convertisseur 23 fournit davantage de puissance au réseau 10, pour compenser la perte de puissance générée sur le réseau 41. L'équilibre entre les puissances injectées et prélevées sur le réseau 10 étant maintenu, la tension sur ce réseau 10 est maintenue constante.

Les diagrammes de la figure 6 illustrent l'évolution des puissances électriques correctives DP13, DP23. Pour limiter les oscillations angulaires et la vitesse de ces variations entre les réseaux alternatifs 41 et 42, les convertisseurs 21 et 22 mettent en oeuvre les puissances électriques correctives DP13 et DP23. L'application de ces puissances correctives permet de converger vers un écart d'angle constant entre les réseaux 41 et 42, comme illustré à la figure 4.

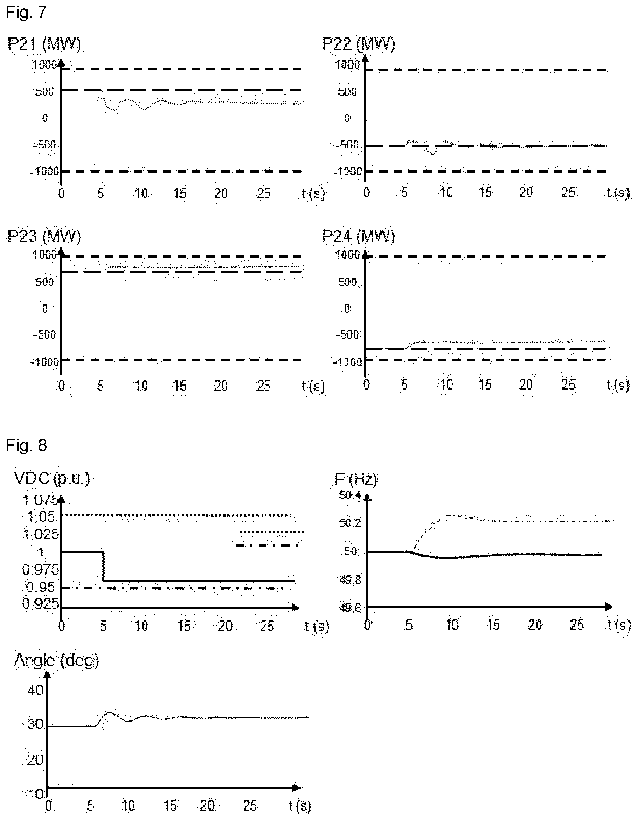

Les diagrammes de la figure 7 illustrent (par les courbes en pointillés) les puissances électriques réelles échangées par chacun des convertisseurs 21 à 24. La puissance électrique corrective d'un convertisseur donné est calculé par ajout des puissances correctives pour les différents paramètres électriques pris en compte, en tenant compte de la limitation de puissance de ce convertisseur (courbe en trait discontinu). La puissance électrique corrective de chaque convertisseur est ajoutée à la puissance du point de fonctionnement initial illustrée par la courbe en trait discontinu.

En référence aux figures 8 à 11, l'invention est appliquée pour les paramètres électriques suivants dans un deuxième cas de figure :

- la stabilité en tension du réseau 10 ;
- la fréquence d'un réseau alternatif ;
- la stabilité angulaire d'un réseau alternatif.

Un deuxième cas de figure a été simulé. Dans ce deuxième cas de figure, à l'instant t=5s, on suppose une perte de puissance du convertisseur 23, qui fournissait initialement 700MW au réseau 10.

Ce cas de figure est représenté dans les diagrammes de la figure 8. Le diagramme de la tension VDC du réseau en fonction du temps montre que la tension du réseau 10 est affectée et baisse jusqu'à un niveau constant. La courbe en trait plein représente la tension sur le réseau 10, la courbe en pointillés représente la limite supérieure de cette tension, et la courbe en tiret-point représente la limite inférieure de cette tension. Le diagramme de fréquence F montre l'évolution des fréquences des réseaux alternatif. La courbe en trait plein illustre la fréquence sur les réseaux 41, 42 d'une part et 44 d'autre part, la courbe en tiret-point illustrant la fréquence sur le réseau 43. Du fait du contrôle en fréquence, une baisse de fréquence des réseaux alternatif 41, 42 et 44 intervient et une hausse de la fréquence du réseau 43 intervient ces fréquences se stabilisant vers de nouvelles valeurs contrôlées. Le diagramme d'angle illustre l'évolution de la différence d'angle entre les interfaces 51 et 52 des convertisseurs 21 et 22 respectivement. Après quelques oscillations réduites, la différence d'angle entre les interfaces 51 et 52 converge vers une nouvelle valeur.

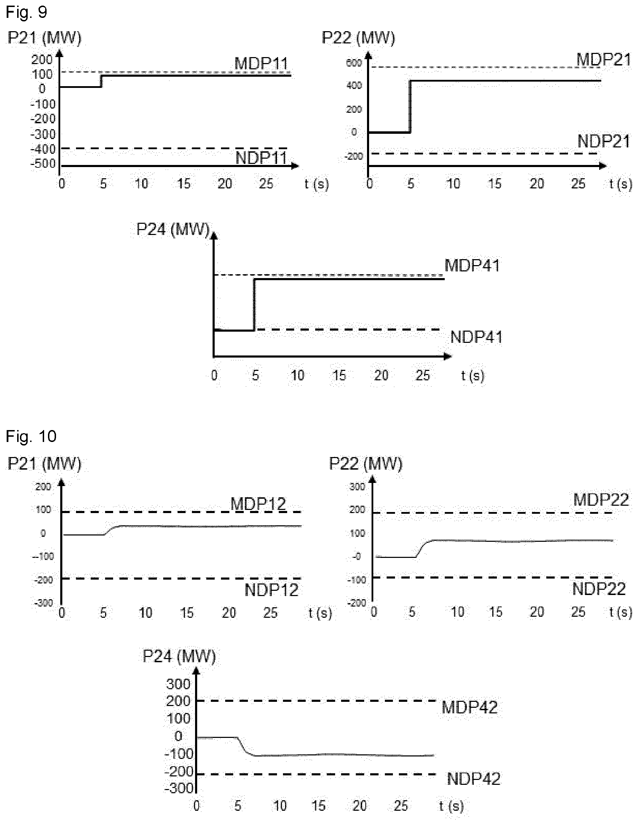

Les diagrammes de la figure 9 illustrent l'évolution des puissances électriques correctives DP11, DP21 et DP41 respectives des convertisseurs 21, 22 et 24, utilisées pour mettre en oeuvre le contrôle de la stabilité en tension sur le réseau 10. Les lignes en trait discontinu illustrent les limites inférieures et supérieures des puissances électriques correctrices pour ce paramètre électrique. Comme on peut le voir dans les diagrammes de la figure 9 avec des puissances correctives positives, le convertisseur 21 fournit davantage de puissance électrique au réseau 10, les convertisseurs 23 et 24 prélevant moins de puissance du réseau 10, pour équilibrer la perte de la puissance fournie par le convertisseur 23. La chute de tension continue résultant du déséquilibre du bilan énergétique du réseau 10 est stoppée par les compensations effectuées par les actions de contrôle de la tension continue.

Les diagrammes de la figure 10 illustrent l'évolution des puissances électriques correctives DP12, DP22 et DP42, utilisées pour mettre en oeuvre le contrôle de la stabilité en fréquence des réseaux alternatif. Les lignes en trait discontinu illustrent les limites inférieures et supérieures des puissances électriques correctrices pour ce paramètre électrique. Comme on peut le voir dans les diagrammes de la figure 10, la puissance corrective DP12 du convertisseur 21 est positive, de même que la puissance corrective DP22 du convertisseur 22. La puissance corrective DP42 du convertisseur 24 est négative, pour tenir compte du fait que le réseau 44 a une moindre inertie.

Les diagrammes de la figure 8 illustrent bien l'efficacité des puissances correctives sur les paramètres contrôlés.

Les diagrammes de la figure 10 illustrent les paramètres correctifs DP11, DP12 et DP13 appliqués par le convertisseur 21. On constate le contrôle en simultané de trois paramètres électriques, tout en évitant une surcharge du convertisseur 21.

## Revendications

1. Procédé de commande d'un convertisseur alternatif/continu (21) connecté d'une part à un réseau alternatif (41) et d'autre part à un réseau haute tension courant continu à points multiples (10), comprenant les étapes de :

   - identification d'une consigne de puissance électrique (P210), ladite consigne étant reçue d'un dispositif externe, et identification du point de fonctionnement (P10) du convertisseur ;
   - en fonction du point de fonctionnement identifié du convertisseur (P10), fixer des bornes de consignes correctives de puissance respectives (MDP11, MDP12, MDP13, NDP11, NDP12, NDP13) pour au moins deux paramètres électriques différents à contrôler ;
   - générer des consignes correctives de puissance (DP11, DP12) pour lesdits au moins deux paramètres électriques différents du convertisseur (21), chacune de ces consignes correctives de puissance étant comprise entre lesdites bornes respectives ;
   - appliquer une consigne de puissance électrique au convertisseur (P211), cette consigne de puissance électrique étant la somme de la consigne de puissance électrique identifiée (P210) et des consignes correctives générées (DP11, DP12).

2. Procédé selon la revendication 1, dans lequel lesdits paramètres électriques sont sélectionnés dans le groupe constitué de la tension sur l'interface continu du convertisseur, de la fréquence sur l'interface alternatif du convertisseur, d'une inertie émulée sur l'interface alternatif du convertisseur, de l'angle de la tension sur l'interface alternatif du convertisseur, de la détection d'une défaillance, de la détection d'un mode de reprise de service accélérée, de l'alimentation du convertisseur, de la synchronisation du convertisseur, des interactions entre le réseau continu et d'autres équipements, de l'amortissement des oscillations de puissance, de l'amortissement des interactions entre sous réseau synchrones, des caractéristiques des réseaux alternatif, de la robustesse du système incluant le réseau continu et les réseaux alternatifs, des réglages de protection électrique, des stratégies de protection électriques, d'une priorisation de la protection et du contrôle et des changements des stratégies et réglage de protection.

3. Procédé selon la revendication 1 ou 2, dans lequel lesdites bornes des consignes correctives sont définies en fonction de la marge de puissance électrique disponible pour le point de fonctionnement identifié.

4. Procédé selon l'une quelconque des revendications précédentes, dans lequel ladite consigne identifiée est reçue du réseau alternatif.

5. Procédé selon l'une quelconque des revendications précédentes, dans lequel lesdits au moins deux paramètres électriques différents à contrôler sont des paramètres électriques de fonctionnement de dispositifs électriques connectés au convertisseur.

6. Procédé selon la revendication 5, dans lequel lesdites consignes correctives de puissance sont établies en fonction des paramètres électriques de fonctionnement mesurés pour lesdits dispositifs connectés au convertisseur.

7. Procédé selon l'une quelconque des revendications précédentes, dans lequel lesdites consignes correctives de puissance sont établies par un contrôleur du convertisseur.

8. Procédé selon la revendication 7, dans lequel un desdits paramètres électriques de fonctionnement est la tension du réseau haute tension courant continu à points multiples (10) ou dans lequel un desdits paramètres électriques de fonctionnement est l'angle de la tension sur l'interface alternatif du convertisseur, et dans lequel la consigne corrective de puissance correspondante est établie par ledit contrôleur du convertisseur.

9. Convertisseur alternatif/continu (21), comprenant une interface alternatif (51) destinée à être connectée à un réseau alternatif (41) et une interface continu destinée à être connectée à un réseau haute tension courant continu à points multiples (10), le convertisseur alternatif/continu comprenant en outre un circuit de commande configuré pour mettre en oeuvre les étapes du procédé selon l'une quelconque des revendications 1 à 8.

10. Réseau de transmission électrique (1) comprenant plusieurs convertisseurs selon la revendication 9 et des lignes haute tension (112,113,114,123,134) continu interconnectant les interfaces continu desdits convertisseurs.

11. Réseau de transmission électrique (1) selon la revendication 10 , dans lequel au moins deux réseaux alternatifs sont connectés à deux desdits convertisseurs respectifs, ces réseaux alternatifs respectifs étant interconnectés.

12. Procédé de commande d'un réseau de transmission électrique comprenant plusieurs convertisseurs selon la revendication 9 interconnectés par des lignes haute tension continu, au moins un des convertisseurs ayant des bornes de correction de consigne de puissance fixées pour un paramètre électrique d'exploitation distinct des paramètres électriques d'exploitation pour lequel des bornes de correction de consigne de puissance sont fixées pour un autre desdits convertisseurs.

**Patentansprüche**

1. Verfahren zum Steuern eines Wechselstrom-/Gleichstrom-Umrichters (21), der einerseits an ein Wechselstromnetz (41) und andererseits an ein Mehrpunkt-Gleichstrom-Hochspannungsnetz (10) angeschlossen ist, das die folgenden Schritte umfasst:

- Identifizierung eines elektrischen Leistungssollwerts (P210), wobei der Sollwert von einem externen Gerät empfangen wird, und Identifizierung des Betriebspunkts (P10) des Umrichters;
- in Abhängigkeit von dem identifizierten Betriebspunkt des Umrichters (P10), Festlegen der Klemmen der jeweiligen Leistungskorrekturanweisungen (MDP11, MDP12, MDP13, NDP11, NDP12, NDP13) für mindestens zwei unterschiedliche zu prüfende elektrische Parameter;
- Erzeugen von Leistungskorrekturanweisungen (DP11, DP12) für die mindestens zwei unterschiedlichen elektrischen Parameter des Umrichters (21), wobei jede dieser Leistungskorrekturanweisungen zwischen den jeweiligen Klemmen liegt;
- Anwenden eines elektrischen Leistungssollwerts auf den Umrichter (P211), wobei dieser elektrische Leistungssollwert die Summe des identifizierten elektrischen Leistungssollwerts (P210) und der erzeugten Korrekturwerte (DP11, DP12) ist.

**2.** Verfahren nach Anspruch 1, wobei die elektrischen Parameter aus der Gruppe ausgewählt werden, die aus der Spannung an der Gleichstromschnittstelle des Umrichters, der Frequenz an der Wechselstromschnittstelle des Umrichters, einer emulierten Trägheit an der Wechselstromschnittstelle des Umrichters, dem Spannungswinkel an der Wechselstromschnittstelle des Umrichters, der Erfassung eines Fehlers, der Erfassung eines beschleunigten Wiederherstellungsmodus des Betriebs, der Stromversorgung des Umrichters, der Synchronisation des Umrichters, der Wechselwirkungen zwischen dem Gleichstromnetz und anderen Ausrüstungen, der Dämpfung von Leistungsschwingungen, der Dämpfung der Wechselwirkungen zwischen synchronen Teilnetzen, der Eigenschaften der Wechselstromnetze, der Robustheit des Systems, das das Gleichstromnetz und die Wechselstromnetze einschließt, der elektrischen Schutzeinstellungen, den elektrischen Schutzstrategien, der Priorisierung des Schutzes und der Steuerung und den Änderungen der Schutzstrategien und - einstellungen besteht.

**3.** Verfahren nach Anspruch 1 oder 2, wobei die Klemmen der Korrekturanweisungen in Abhängigkeit von der für den identifizierten Betriebspunkt verfügbaren elektrischen Leistungsmarge definiert werden.

**4.** Verfahren nach einem der vorstehenden Ansprüche, wobei die identifizierte Anweisung von dem Wechselstromnetz empfangen wird.

**5.** Verfahren nach einem der vorstehenden Ansprüche, wobei die mindestens zwei zu prüfenden unterschiedlichen elektrischen Parameter elektrische Betriebsparameter von elektrischen Vorrichtungen sind, die an den Umrichter angeschlossen sind.

**6.** Verfahren nach Anspruch 5, wobei die Leistungskorrekturanweisungen in Abhängigkeit von den gemessenen elektrischen Betriebsparametern für die an den Umrichter angeschlossenen Vorrichtungen erstellt werden.

**7.** Verfahren nach einem der vorstehenden Ansprüche, wobei die Leistungskorrekturanweisungen von einer Steuervorrichtung des Umrichters erstellt werden.

**8.** Verfahren nach Anspruch 7, wobei einer der elektrischen Betriebsparameter die Spannung des Mehrpunkt-Gleichstrom-Hochspannungsnetzes (10) ist, oder wobei einer der elektrischen Betriebsparameter der Winkel der Spannung an der Wechselstromschnittstelle des Umrichters ist, und wobei der entsprechende Leistungskorrektursollwert von der Umrichtersteuervorrichtung erstellt wird.

**9.** Wechselstrom-/Gleichstrom-Umrichter (21), der eine Wechselstromschnittstelle (51) umfasst, die dazu bestimmt ist, an ein Wechselstromnetz (41) angeschlossen zu werden, und eine Gleichstromschnittstelle, die dazu bestimmt ist, an ein Mehrpunkt-Gleichstrom-Hochspannungsnetz (10) angeschlossen zu werden, wobei der Wechselstrom-/Gleichstrom-Umrichter außerdem eine Steuerschaltung umfasst, die dazu konfiguriert ist, die Schritte des Verfahrens nach einem der Ansprüche 1 bis 8 umzusetzen.

**10.** Elektrisches Übertragungsnetz (1), das mehrere Umrichter nach Anspruch 9 und Hochspannungs-Gleichstromleitungen (112, 113, 114, 123, 134) umfasst, die die Gleichstromschnittstellen dieser Umrichter verbinden.

**11.** Elektrisches Übertragungsnetz (1) nach Anspruch 10, wobei mindestens zwei Wechselstromnetze an zwei der jeweiligen Umrichter angeschlossen sind, wobei diese jeweiligen Wechselstromnetze miteinander verbunden sind.

**12.** Verfahren zum Steuern eines elektrischen Übertragungsnetzes, das mehrere Umrichter umfasst, nach Anspruch 9, die durch Hochspannungs-Gleichstromleitungen miteinander verbunden sind, wobei mindestens einer der Umrichter Leistungssollwertkorrekturklemmen aufweist, die für einen elektrischen Betriebsparameter festgelegt sind, der sich von den elektrischen Betriebsparametern unterscheidet, für die Leistungssollwertkorrekturklemmen für einen anderen der Umrichter festgelegt sind.

**Claims**

**1.** Method for controlling an AC/DC converter (21) connected, on the one hand, to an AC network (41) and, on the other hand, to a multi-point DC high-voltage network (10), comprising the steps of:

- identification of an electric power setpoint (P210), said setpoint being received from an external device, and identification of the operating point (P10) of the converter;
- depending on the identified operating point of the converter (P10), set respective power corrective setpoint terminals (MDP11, MDP12, MDP13, NDP11, NDP12, NDP13) for at least two different electrical parameters to be controlled;
- generate corrective power setpoints (DP11, DP12) for said at least two different electrical parameters of the converter (21), each of these corrective power setpoints being between said respective terminals;
- apply an electrical power setpoint to the converter (P211), this electrical power setpoint being the sum of the identified electrical power setpoint (P210) and the generated corrective setpoints (DP11, DP12).

2. The method of claim 1, wherein said electrical parameters are selected from the group consisting of voltage on the DC interface of the converter, frequency on the AC interface of the converter, emulated inertia on the AC interface of the converter, angle of voltage on the AC interface of the converter, detection of a failure, detection of an accelerated recovery mode, power supply of the converter, synchronization of the converter, interactions between the DC network and other equipment, damping of power oscillations, damping of interactions between synchronous sub-networks, characteristics of the AC networks, robustness of the system including the DC network and the AC networks, electrical protection settings, electrical protection strategies, prioritization of protection and control and changes in protection strategies and settings.

3. A method as claimed in claim 1 or 2, wherein said bounds of the corrective setpoints are defined as a function of the margin of electrical power available for the identified operating point.

4. Method according to any one of the preceding claims, wherein said identified setpoint is received from the AC network.

5. The method according to any one of the preceding claims, wherein said at least two different electrical parameters to be monitored are electrical operating parameters of electrical devices connected to the converter.

6. The method according to claim 5, wherein said corrective power setpoints are established as a function of the electrical operating parameters measured for said devices connected to the converter.

7. The method according to any one of the preceding claims, wherein said corrective power setpoints are set by a controller of the converter.

8. The method of claim 7, wherein one of said electrical operating parameters is the voltage of the multi-point DC high-voltage network (10) or wherein one of said electrical operating parameters is the angle of the voltage on the AC interface of the converter, and wherein the corresponding power corrective setpoint is set by said controller of the converter.

9. An AC/DC converter (21), comprising an AC interface (51) for connection to an AC network (41) and a DC interface for connection to a multi-point DC high-voltage network (10), the AC/DC converter further comprising a control circuit configured to implement the steps of the method of any one of claims 1 to 8.

10. Electric transmission network (1) comprising several converters according to claim 9 and DC high-voltage lines (112, 113, 114, 123, 134) interconnecting the DC interfaces of said converters.

11. Electric transmission network (1) according to claim 10, wherein at least two AC networks are connected to two of said respective converters, these respective AC networks being interconnected.

12. A method of controlling an electrical transmission network comprising a plurality of converters according to claim 9 interconnected by DC high-voltage lines, at least one of the converters having power setpoint correction terminals set for an operating electrical parameter distinct from the operating electrical parameters for which power setpoint correction terminals are set for another one of said converters.

Fig. 1

Fig. 2

Fig. 3

Fig. 4

Fig. 5

Fig. 6

Fig. 7

Fig. 8

Fig. 9

Fig. 10

Fig. 11

DP11 (MW)

DP12 (MW)

DP13 (MW)

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5991181 A
- FR 3098036
- JP H1051957 A
- JP 2019205303 A
- WO 2019097183 A

**Littérature non-brevet citée dans la description**

- **S.AKKARI et al.** Coupling between the frequency droop and the voltage droop of an AC/DC converter in an MTDC system. *2015 IEEE Eindhoven PowerTech, PowerTech 2015,* 2015
- **C.D. BARKER et al.** Autonomous converter control in a multi-terminal HVDC system. *9th IET International Conférence on AC and DC Power Transmission,* 2010
- **SASS FLORIAN et al.** Automated Corrective Actions by VSC-HVDC-Systems: A Novel Remedial Action Scheme. *IEEE Transactions On Power Systems,* 2019